# EUROPEAN PATENT APPLICATION

(11) **EP 4 632 892 A1**
(43) Date of publication of application: **15.10.2025**
(21) Application number: 23928329.4
(22) Date of filing: 24.10.2023
(51) Int. Cl.: H01M 50/172

(54) **BATTERY CELL, BATTERY AND ELECTRIC DEVICE**

(30) Priority: 21.03.2023 CN 202310279916
(71) Applicant: Contemporary Amperex Technology (Hong Kong) Limited, Hong Kong (HK)
(72) Inventor: XU, Liangfan, Ningde, Fujian 352100 (CN); ZHOU, Wenlin, Ningde, Fujian 352100 (CN); LI, Xing, Ningde, Fujian 352100 (CN); ZHANG, Qianqian, Ningde, Fujian 352100 (CN); NIU, Shaojun, Ningde, Fujian 352100 (CN); JIN, Haizu, Ningde, Fujian 352100 (CN)
(74) Representative: Kraus & Lederer PartGmbB
(86) International application number: PCT/CN2023/126107
(87) International publication number: WO 2024/193025

(57) **Abstract**

A battery cell (20), a cell (100), and a power consuming device are provided, which belong to the field of battery technologies. The battery cell (20) includes a housing (21), an electrode terminal (22), an electrode assembly (23), an insulating member (24), and a liquid absorbing member (25), where the housing (21) includes a first wall (213); the electrode terminal (22) is arranged on the first wall (213); the electrode assembly (23) includes a body (231) and a tab (232) extending out from the body (231), and the tab (232) is electrically connected to the electrode terminal (22); the insulating member (24) is arranged between the first wall (213) and the electrode assembly (23) and configured to isolate the first wall (213) from the electrode assembly (23); and the liquid absorbing member (25) is located between the body (231) and the insulating member (24) and configured to absorb an electrolyte solution. The battery cell has high reliability.

## Description

### CROSS-REFERENCE TO RELATED APPLICATIONS

This application claims priority to Chinese Patent Application CN202310279916.4, entitled "BATTERY CELL, BATTERY, AND POWER CONSUMING DEVICE" and filed on March 21, 2023, which is incorporated herein by reference in its entirety.

### TECHNICAL FIELD

This application relates to the field of battery technologies, and in particular, to a battery cell, a battery, and a power consuming device.

### BACKGROUND

Energy conservation and emission reduction are keys to sustainable development of the automobile industry, and due to advantages of energy conservation and environmental protection, electric vehicles become an important part of the sustainable development of the automobile industry. For the electric vehicles, the battery technology is also an important factor related to development of the electric vehicles.

During manufacturing of a battery, the reliability of the battery is a non-negligible issue. Therefore, how to improve the reliability of the battery is a technical problem to be urgently resolved in the battery technology.

### SUMMARY

An objective of this application is to provide a battery cell, a battery, and a power consuming device. The battery cell has high reliability.

This application is implemented through the following technical solutions:

According to a first aspect, this application provides a battery cell, including a housing, an electrode terminal, an electrode assembly, an insulating member, and a liquid absorbing member, where the housing includes a first wall; the electrode terminal is arranged on the first wall; the electrode assembly includes a body and a tab extending out from the body, and the tab is electrically connected to the electrode terminal; the insulating member is arranged between the first wall and the electrode assembly, and the insulating member is configured to isolate the first wall from the electrode assembly; and the liquid absorbing member is located between the body and the insulating member, and the liquid absorbing member is configured to absorb an electrolyte solution.

According to the battery cell provided in this embodiment of this application, in a use scenario in which the body of the electrode assembly is arranged on the insulating member, the liquid absorbing member is located between the body and the insulating member, and the liquid absorbing member can absorb the electrolyte solution located between the insulating member and the body, to reduce a free electrolyte solution on a side of the insulating member facing the body, so that a possibility that the electrolyte solution participates in an electrochemical reaction between metal particles or separated active substances and the housing is reduced, and a risk of corrosion and liquid leakage of the housing is reduced. Therefore, the battery cell has high reliability.

According to some embodiments of this application, the housing includes a shell and an end cap, the shell has an opening, the end cap closes the opening, the end cap is connected to the shell to form a connection portion, the end cap is the first wall, and along a thickness direction of the end cap, a projection of the liquid absorbing member on the end cap does not overlap with the connection portion.

In the foregoing solution, the end cap is the first wall, the projection of the liquid absorbing member on the end cap does not overlap with the connection portion, so that after the liquid absorbing member absorbs the electrolyte solution, a possibility that the electrolyte solution remains at the connection portion is reduced, and a risk of corrosion and liquid leakage of the connection portion can be reduced.

According to some embodiments of this application, the battery cell further includes a pressure relief mechanism, the pressure relief mechanism is arranged on the first wall, and along a thickness direction of the first wall, a projection of the liquid absorbing member on the first wall does not overlap with the pressure relief mechanism.

In the foregoing solution, the pressure relief mechanism is arranged on the first wall, and the projection of the liquid absorbing member on the first wall does not overlap with the pressure relief mechanism, so that the liquid absorbing member absorbs a free electrolyte solution, accumulation of the electrolyte solution at the pressure relief mechanism is reduced, and a risk of corrosion and liquid leakage of the pressure relief mechanism is reduced.

According to some embodiments of this application, the battery cell further includes an adapting member, the adapting member is arranged on a side of the insulating member facing the electrode assembly, the adapting member connects the electrode terminal to the tab, and along the thickness direction of the first wall, a projection of the adapting member on the first wall at least partially overlaps with the projection of the liquid absorbing member on the first wall.

In the foregoing solution, the projection of the adapting member on the first wall at least partially overlaps with the projection of the liquid absorbing member on the first wall, so that the liquid absorbing member absorbs the electrolyte solution to the vicinity of the adapting member, and the electrolyte solution is in contact with the tab, transported to a separator through the tab, and absorbed and stored by the separator.

According to some embodiments of this application, along the thickness direction of the first wall, a gap exists between the adapting member and the insulating member, and at least a part of the liquid absorbing member is located in the gap.

In the foregoing solution, at least a part of the liquid absorbing member is located in the gap, and expansion and deformation of the liquid absorbing member after absorbing the electrolyte solution are limited through the adapting member, so that the electrolyte solution absorbed by the liquid absorbing member is squeezed out, and the squeezed electrolyte solution can be transported to the separator along the tab to be stored by the separator.

According to some embodiments of this application, the tab is connected to a side of the adapting member facing away from the insulating member.

In the foregoing solution, the tab is connected to the side of the adapting member facing away from the insulating member, so that the adapting member and the insulating member are assembled, and the tab is connected to the adapting member.

According to some embodiments of this application, along the thickness direction of the first wall, the projection of the liquid absorbing member on the first wall at least partially overlaps with a projection of the tab on the first wall.

In the foregoing solution, the projection of the liquid absorbing member on the first wall at least partially overlaps with the projection of the tab on the first wall, so that the electrolyte solution absorbed by the liquid absorbing member is transported to the separator along the tab to be stored by the separator. When the tab is connected to a side of the adapting member facing the insulating member, the tab is close to the liquid absorbing member or is in contact with the liquid absorbing member, and the electrolyte solution absorbed by the liquid absorbing member is easily in contact with the tab, so that the electrolyte solution is easily transported to the separator through the tab. When the tab is connected to the side of the adapting member facing away from the insulating member, expansion of the liquid absorbing member after absorbing the electrolyte solution is limited by the adapting member, the electrolyte solution absorbed by the liquid absorbing member is squeezed out, and the squeezed electrolyte solution easily accumulates on the side of the adapting member facing away from the insulating member, so that the electrolyte solution is easily in contact with the tab and is transported to the separator through the tab.

According to some embodiments of this application, the liquid absorbing member includes a first portion and a second portion, the first portion is located in the gap, and the second portion is connected to the first portion and protrudes out of an edge of the adapting member.

In the foregoing solution, the second portion protrudes out of the edge of the adapting member, after expansion of the first portion after absorbing the electrolyte solution is limited by the adapting member, the electrolyte solution can be squeezed out, and after the second portion is expanded after absorbing the electrolyte solution, the electrolyte solution at the liquid absorbing member is easily in contact with the tab and is transported to the separator through the tab.

According to some embodiments of this application, the second portion is in contact with the tab.

In the foregoing solution, the second portion is in contact with the tab, so that the electrolyte solution is transported to the separator through the tab to be stored by the separator.

According to some embodiments of this application, along the thickness direction of the first wall, a size of the gap is H, and H meets: 0.2 mm≤H≤1 mm.

In the foregoing solution, through arrangement of the gap, the liquid absorbing member can be accommodated, and space occupation can be reduced.

According to some embodiments of this application, 0.4 mm≤H≤0.6 mm.

In the foregoing solution, compared with a case that 0.2 mm≤H, when 0.4 mm≤H, the liquid absorbing member is thick; and compared with a case that H≤1 mm, when H≤0.6 mm, the liquid absorbing member occupies a limited space.

According to some embodiments of this application, the battery cell further includes a support member, the support member is arranged on a side of the insulating member facing the electrode assembly, the support member is located between the insulating member and the body, the tab is bent around the support member, the support member is configured to prevent the body from moving along a direction facing the first wall, and the liquid absorbing member is arranged between the support member and the insulating member.

In the foregoing solution, the support member is located between the insulating member and the body, and the tab is bent around the support member, so that the support member can facilitate bending of the tab and can be supported between the insulating member and the body, to position the body, thereby reducing a possibility that the tab is driven to move by movement of the body and reducing a risk that a joint between the tab and another component is damaged.

According to some embodiments of this application, the battery cell further includes an adapting member, the adapting member is arranged between the insulating member and the support member, and the adapting member connects the electrode terminal to the tab.

In the foregoing solution, the adapting member is arranged between the insulating member and the support member, to implement an electrical connection between the electrode terminal and the tab.

According to some embodiments of this application, along the thickness direction of the first wall, the projection of the adapting member on the first wall at least partially overlaps with the projection of the liquid absorbing member on the first wall.

In the foregoing solution, when the liquid absorbing member is located between the adapting member and the insulating member, the adapting member and the insulating member can limit an expansion and deformation amount of the liquid absorbing member after absorbing the electrolyte solution, so that the electrolyte solution is guided by the liquid absorbing member to the vicinity of the adapting member, and the electrolyte solution is in contact with the tab, transported to the separator through the tab, and absorbed and stored by the separator. When the liquid absorbing member is located between the adapting member and the support member, the liquid absorbing member may be close to the tab, so that the liquid absorbing member can guide the electrolyte solution to the vicinity of the tab, and the electrolyte solution is in contact with the tab, transported to the separator through the tab, and absorbed and stored by the separator.

According to some embodiments of this application, the liquid absorbing member is made of an insulating porous material.

In the foregoing solution, the liquid absorbing member has an insulation function to reduce a risk of short circuit caused by contact between components inside the battery cell, and the porous material has a good adsorption effect, so that the liquid absorbing member can absorb more electrolyte solutions.

According to some embodiments of this application, the tab includes a plurality of stacked sub-tabs.

In the foregoing solution, the tab includes a plurality of sub-tabs, a gap exists between every two adjacent sub-tabs, and after the electrolyte solution comes into contact with the tab, under capillary action, the electrolyte solution moves toward the separator along the sub-tabs.

According to some embodiments of this application, an initial volume of the liquid absorbing member is V0, and after the liquid absorbing member absorbs the electrolyte solution and is saturated, a volume of the liquid absorbing member is V1, and V0 and V1 meet: 5≤V1/V0≤10.

In the foregoing solution, the liquid absorbing member has a good saturation absorption capacity, so that a liquid absorbing effect is good; if V1/VO is small (for example, less than 5), the liquid absorbing member has a small saturation absorption capacity, and a liquid absorbing effect is not good; and if V1/VO is large (for example, greater than 10), when the liquid absorbing member is arranged between the adapting member and the insulating member and the tab is connected to the side of the adapting member facing away from the insulating member, volume expansion of the liquid absorbing member is excessively large, leading to an excessively large forced deformation amount of the tab.

According to some embodiments of this application, 7≤V1/V0≤9.

In the foregoing solution, compared with a case that 5≤V1/V0, when 7≤V1/V0, the saturation absorption capacity of the liquid absorbing member is large, and the liquid absorbing effect is good; and compared with a case that V1/V0≤10, when V1/V0≤9, the volume expansion of the liquid absorbing member is small.

According to a second aspect, an embodiment of this application provides a battery, including the battery cell according to any one of the foregoing embodiments.

According to a third aspect, an embodiment of this application provides a power consuming device, including the battery cell according to any one of the foregoing embodiments or the battery, where the battery cell is configured to provide electric energy.

Additional aspects and advantages of this application are partially given in the following description, and partially become apparent from the following description or may be learned from practices of this application.

### BRIEF DESCRIPTION OF THE DRAWINGS

In order to explain the technical solutions of the embodiments of this application more clearly, the accompanying drawings required for the embodiments of this application will be briefly described below. Apparently, the accompanying drawings described below are only some embodiments of this application. For a person of ordinary skill in the art, other accompanying drawings can be further obtained according to the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a partial schematic structural diagram of a battery cell according to some embodiments of this application;
FIG. 5 is a schematic diagram of assembly of an adapting member and a liquid absorbing member according to some embodiments of this application;
FIG. 6 is a schematic diagram of assembly of an adapting member and an insulating member according to some embodiments of this application;
FIG. 7 is a partially enlarged view of a position A in FIG. 6;
FIG. 8 is a partially enlarged view of a position B in FIG. 4;
FIG. 9 is a schematic diagram of contact between a second portion and a tab according to some embodiments of this application;
FIG. 10 is a cross-sectional view of a battery cell according to some other embodiments of this application; and
FIG. 11 is a partially enlarged view of a position C in FIG. 10.

In the accompanying drawings, the accompanying drawings are not drawn in an actual proportion.

Description of reference numerals: 1000-Vehicle; 100-Battery; 10-Box; 11-First sub-box; 12-Second sub-box; 20-Battery cell; 21-Housing; 211-Shell; 212-End cap; 213-First wall; 22-Electrode terminal; 23-Electrode assembly; 231-Body; 232-Tab; 24-Insulating member; 25-Liquid absorbing member; 251-First portion; 252-Second portion; 26-Adapting member; 261-First connection segment; 262-Second connection segment; 27-Pressure relief mechanism; 28-Support member; 281-Support portion; 282-Separation portion; Q-Gap; 200-Controller; and 300-Motor.

### DETAILED DESCRIPTION

The following describes implementations of this application with reference to the accompanying drawings and embodiments. The detailed description of the following embodiments and the accompanying drawings are used for exemplarily describing the principle of this application, but cannot be used for limiting a scope of this application. That is, this application is not limited to the described embodiments.

Unless otherwise defined, meanings of all technical and scientific terms used in this application are the same as those usually understood by a person skilled in the art to which this application belongs. In this application, terms used in the specification of this application are only intended to describe specific embodiments, and are not intended to limit this application. In the specification, claims, and accompanying drawings of this application, the terms "include", "have", and any other variants are intended to cover non-exclusive inclusion.

In the specification, claims, and accompanying drawings of this application, the terms "first", "second", and the like are intended to distinguish between different objects but do not indicate a particular sequence or primary-secondary relationship.

"Embodiment" mentioned in this application means that particular features, structures, or characteristics described with reference to the embodiment may be included in at least one embodiment of this application. The term appearing at different positions of the specification may not refer to the same embodiment or an independent or alternative embodiment that is mutually exclusive with another embodiment. A person skilled in the art explicitly or implicitly understands that the embodiments described in this application may be combined with other embodiments.

In the description of this application, it should be noted that, unless otherwise explicitly specified or defined, the terms such as "mount", "connect", "connection", and "attachment" should be understood in a broad sense. For example, the connection may be a fixed connection, a detachable connection, or an integral connection; or the connection may be a direct connection, an indirect connection through an intermediary, or internal communication between two elements. A person of ordinary skill in the art may understand specific meanings of the terms in this application according to specific situations.

In this application, the term "and/or" describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In this application, the term "a plurality of" means two or more (including two). Similarly, "a plurality of groups" means two or more groups (including two groups), and "a plurality of pieces" means two or more pieces (including two pieces).

A battery mentioned in this application is a single physical module including one or more battery cells to provide a higher voltage and a higher capacity. For example, the battery mentioned in this application may include a battery module, a battery pack, or the like.

The battery cell includes an electrode assembly and an electrolyte solution, and the electrode assembly is formed by a positive electrode plate, a negative electrode plate, and a separator. The battery cell works mainly relying on movement of metal ions between the positive electrode plate and the negative electrode plate. The positive electrode plate includes a positive electrode current collector and a positive electrode active substance layer, the positive electrode active substance layer is coated on a surface of the positive electrode current collector, and a current collector not coated with the positive electrode active substance layer is used as a positive electrode tab. By using a lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, the negative electrode active substance layer is coated on a surface of the negative electrode current collector, and a current collector not coated with the negative electrode active substance layer is used as a negative electrode tab. A material of the negative electrode current collector may be copper, and a negative electrode active substance may be carbon, silicon, or the like. To ensure that no fusing occurs when a large current passes through, there are a plurality of positive electrode tabs and the positive electrode tabs are stacked, and there are a plurality of negative electrode tabs and the negative electrode tabs are stacked. The separator may be made of a material such as polypropylene (PP) or polyethylene (PE).

For the development of the battery technology, design factors in many aspects, for example, performance parameters such as an energy density, a discharge capacity, and a charge-discharge rate need to be considered simultaneously, and the reliability of the battery also needs to be considered.

In a working process of the battery cell, in addition to being stored inside the electrode assembly, a part of the electrolyte solution accumulates at a bottom of the housing, and the electrolyte solution may be referred to as a free electrolyte solution. When the free electrolyte solution accumulates at the bottom of the housing, metal particles or separated active substance layers inside the battery cell are in contact with the housing, leading to electrochemical corrosion, and the free electrolyte solution participates in an electrochemical reaction as an ion medium. As a result, the electrochemical corrosion occurs, lithium is intercalated in the housing, and the housing encounters corrosion and liquid leakage, leading to low reliability of the battery cell.

In view of this, to resolve the problem of corrosion and liquid leakage of the housing caused by participation of the free electrolyte solution in the electrochemical reaction between the metal particles or separated active substance layers and the housing, the inventor designs a technical solution through in-depth research. In the technical solution, a liquid absorbing member is arranged in the housing, and the electrolyte solution is absorbed by the liquid absorbing member, to reduce the free electrolyte solution, so that a possibility that the electrolyte solution participates in the electrochemical reaction between the metal particles or separated active substances and the housing is reduced, thereby reducing a risk of corrosion and liquid leakage of the housing. Therefore, the battery cell has high reliability.

In such a battery cell, in a use scenario in which a body of the electrode assembly is located on an insulating member, the metal particles or active substances easily drop onto the insulating member, and the electrolyte solution easily accumulates between the insulating member and the body. By arranging the liquid absorbing member between the body and the insulating member, the liquid absorbing member can absorb the electrolyte solution between the insulating member and the body, to reduce the free electrolyte solution on a side of the insulating member facing the body, and the reduced free electrolyte solution can reduce the possibility that the electrolyte solution participates in the electrochemical reaction between the metal particles or separated active substances and the housing, thereby reducing the risk of corrosion and liquid leakage of the housing.

The battery cell disclosed in the embodiments of this application may be used in, but is not limited to, a power consuming device such as a vehicle, a ship, or an aerial vehicle. The battery cell or battery disclosed in this application may be used to form a power supply system of the power consuming device.

An embodiment of this application provides a power consuming device using a battery as a power supply, and the power consuming device may be, but is not limited to, a mobile phone, a tablet computer, a notebook computer, an electric toy, an electric tool, an electric bicycle, an electric motorcycle, an electric vehicle, a ship, or a spacecraft. The electric toy may include a fixed or movable electric toy, for example, a game console, an electric vehicle toy, an electric ship toy, or an electric aircraft toy, and the spacecraft may include an aircraft, a rocket, a space shuttle, or a spaceship.

For ease of description, in the following embodiments, description is provided by using an example in which the power consuming device provided in this embodiment of this application is a vehicle 1000.

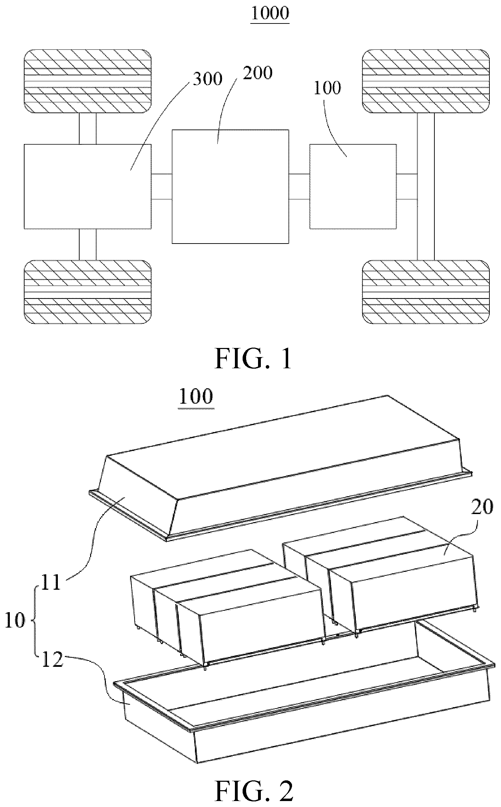

Referring to FIG. 1, FIG. 1 is a schematic structural diagram of a vehicle according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle. A battery 100 is arranged inside the vehicle 1000, and the battery 100 may be arranged at a bottom, head, or tail of the vehicle 1000. The battery 100 may be configured to supply power to the vehicle 1000. For example, the battery 100 may be used as an operating power supply of the vehicle 1000 and used for a circuit system of the vehicle 1000, for example, may be used for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of this application, the battery 100 can not only be used as the operating power supply of the vehicle 1000, but can also be used as a driving power supply of the vehicle 1000, to alternatively or partially replace fuel or natural gas to provide driving power for the vehicle 1000.

Referring to FIG. 2, FIG. 2 is an exploded view of a battery according to some embodiments of this application. The battery 100 includes a box 10 and a battery cell 20, where the battery cell 20 is accommodated in the box 10. The box 10 is configured to provide an accommodating space for the battery cell 20, and the box 10 may use a plurality of structures. In some embodiments, the box 10 may include a first sub-box 11 and a second sub-box 12, where the first sub-box 11 and the second sub-box 12 cover each other, and the first sub-box 11 and the second sub-box 12 jointly define the accommodating space for accommodating the battery cell 20. The second sub-box 12 may be a hollow structure being open on one side, the first sub-box 11 may be a plate-like structure, and the first sub-box 11 covers an open side of the second sub-box 12, so that the first sub-box 11 and the second sub-box 12 jointly define the accommodating space. Alternatively, each of the first sub-box 11 and the second sub-box 12 may be a hollow structure being open on one side, and an open side of the first sub-box 11 covers an open side of the second sub-box 12.

In the battery 100, there may be a plurality of battery cells 20, and the plurality of battery cells 20 may be connected in series, parallel, or series-parallel, where series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the box 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and accommodated in the box 10. The battery 100 may also include other structures, for example, the battery 100 may also include a bus component for achieving an electrical connection between the plurality of battery cells 20.

The battery cell 20 may be a secondary battery or a primary battery; or the battery cell 20 may alternatively be a lithium-sulfur battery, a sodium-ion battery, or a magnesium-ion battery, but is not limited thereto.

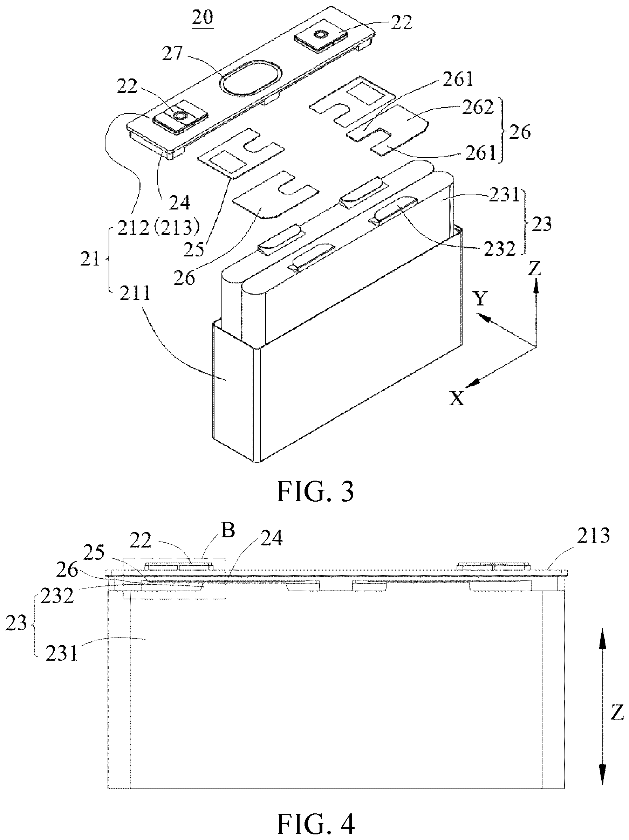

Referring to FIG. 3 and FIG. 4, FIG. 3 is an exploded view of a battery cell according to some embodiments of this application, and FIG. 4 is a partial schematic structural diagram of a battery cell according to some embodiments of this application. According to some embodiments of this application, an embodiment of this application provides a battery cell, including a housing 21, an electrode terminal 22, an electrode assembly 23, an insulating member 24, and a liquid absorbing member 25, where the housing 21 includes a first wall 213; the electrode terminal 22 is arranged on the first wall 213; the electrode assembly 23 includes a body 231 and a tab 232 extending out from the body 231, and the tab 232 is electrically connected to the electrode terminal 22; the insulating member 24 is arranged between the first wall 213 and the electrode assembly 23, and the insulating member 24 is configured to isolate the first wall 213 from the electrode assembly 23; and the liquid absorbing member 25 is located between the body 231 and the insulating member 24, and the liquid absorbing member 25 is configured to absorb an electrolyte solution.

The housing 21 includes a shell 211 and an end cap 212, where the shell 211 has an opening, and the end cap 212 closes the opening, to isolate an internal environment of the battery cell 20 from an external environment.

The shell 211 is a component configured to form the internal environment of the battery cell 20 together with the end cap 212, where the formed internal environment may be used for accommodating the electrode assembly 23, the electrolyte solution, and other components. The shell 211 and the end cap 212 may be independent components. The shell 211 may have a plurality of shapes and a plurality of sizes. Specifically, a shape of the shell 211 may be determined according to a specific shape and size of the electrode assembly 23. The shell 211 may be made of various materials such as copper, iron, aluminum, stainless steel, aluminum alloy, or plastic, which is not particularly limited in the embodiments of this application. The embodiments of this application are described by using an example in which the shell 211 is cuboid-shaped.

The end cap 212 refers to a component that covers the opening of the shell 211 to isolate the internal environment of the battery cell 20 from the external environment. A shape of the end cap 212 is not limited and may be adapted to the shape of the shell 211 to fit the shell 211. Optionally, the end cap 212 may be made of a material with specified hardness and strength (for example, aluminum alloy), so that the end cap 212 is less likely to deform under extrusion and collision, enabling the battery cell 20 to have a higher structural strength and improved safety performance. Functional components such as the electrode terminal 22 may be arranged on the end cap 212. The electrode terminal 22 may be configured to electrically connect to the electrode assembly 23 to output or input electrical energy of the battery cell 20. The end cap 212 may also be made of various materials such as copper, iron, aluminum, stainless steel, aluminum alloy, or plastic, which is not particularly limited in the embodiments of this application. In some embodiments, an insulating structure may also be arranged on an inner side of the end cap 212, and the insulating structure may be configured to isolate electrical connection components in the shell 211 from the end cap 212, so as to reduce a risk of short circuit. For example, the insulating structure may be made of plastic or rubber.

The first wall 213 may be the end cap, or the first wall 213 may alternatively be a wall of the shell.

The electrode assembly 23 is a component in the battery cell 20 that undergoes an electrochemical reaction. The shell 211 may include one or more electrode assemblies 23. The electrode assembly 23 is mainly formed by winding or stacking a positive electrode plate and a negative electrode plate, and a separator is generally arranged between the positive electrode plate and the negative electrode plate, where the separator is configured to separate the positive electrode plate and the negative electrode plate, to avoid an internal short circuit between the positive electrode plate and the negative electrode plate. Parts of the positive electrode plate and the negative electrode plate with active substances form the body 231 of the electrode assembly 23, while parts of the positive electrode plate and the negative electrode plate without active substances separately form the tab 232. The positive electrode tab and the negative electrode tab may be located at one end of the body 231 together or at two ends of the body 231 separately. During charging and discharging of the battery, a positive electrode active substance and a negative electrode active substance react with the electrolyte solution, and the tab 232 is connected to the electrode terminal 22 to form a current loop.

The tab 232 may extend out from an end of the body 231 close to the first wall 213, or the tab 232 may extend out from another end of the body 231.

The tab 232 may be electrically connected to the electrode terminal 22 through an adapting member 26, or the tab 232 may be directly connected to the electrode terminal 22.

The insulating member 24 is an insulating component, and can insulate and isolate the first wall 213 from the electrode assembly 23.

The liquid absorbing member 25 is a component that can absorb the electrolyte solution. For example, the liquid absorbing member 25 may be an elastic component and undergo volume expansion after absorbing liquid (such as the electrolyte solution).

According to the battery cell 20 provided in this embodiment of this application, in a use scenario in which the body 231 of the electrode assembly 23 is arranged on the insulating member 24, the liquid absorbing member 25 is located between the body 231 and the insulating member 24, and the liquid absorbing member 25 can absorb the electrolyte solution located between the insulating member 24 and the body 231, to reduce a free electrolyte solution on a side of the insulating member 24 facing the body 231. In this way, even if metal particles or separated active substance layers are in contact with the housing 21, the reduced free electrolyte solution can reduce the possibility that the electrolyte solution participates in the electrochemical reaction, thereby reducing a risk of corrosion and liquid leakage of the housing 21. Therefore, the battery cell 20 has high reliability.

According to some embodiments of this application, referring to FIG. 4, the tab 232 is located between the body 231 and the insulating member 24.

Along a thickness direction (a direction Z) of the first wall 213, the tab 232 is located between the body 231 and the insulating member 24, and the electrolyte solution absorbed by the liquid absorbing member 25 can easily come into contact with the tab 232, so that the electrolyte solution is transported to the separator through the tab 232.

The separator has pores, so that the separator can absorb and store the electrolyte solution, and after the electrolyte solution comes into contact with the tab 232, under capillary action, the electrolyte solution can be transported to the separator along the tab 232 to be further stored by the separator.

The tab 232 is located between the body 231 and the insulating member 24, and when the liquid absorbing member 25 is arranged adjacent to the tab 232, the electrolyte solution absorbed by the liquid absorbing member 25 can be transported to the separator along the tab 232 to be stored by the separator.

In some embodiments, the tab 232 may extend out from a side of the body 231 facing the first wall 213; or a direction along which the tab 232 extends out from the body 231 may be parallel to the first wall 213.

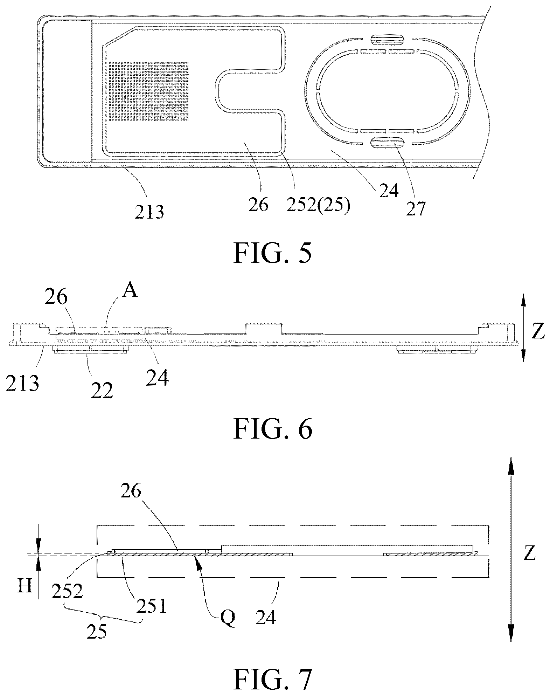

Referring to FIG. 3 and FIG. 4, and further referring to FIG. 5, FIG. 5 is a schematic diagram of assembly of an adapting member and a liquid absorbing member according to some embodiments of this application, and FIG. 5 is a schematic diagram observed from a side of the insulating member 24 facing away from the first wall 213 along the thickness direction of the first wall 213. According to some embodiments of this application, the housing 21 includes a shell 211 and an end cap 212, the shell 211 has an opening, the end cap 212 closes the opening, the end cap 212 is connected to the shell 211 to form a connection portion (not shown in the figure), the end cap 212 is the first wall 213, and along a thickness direction (the direction Z) of the end cap 212, a projection of the liquid absorbing member 25 on the end cap 212 does not overlap with the connection portion.

In the figure, a direction indicated by a letter Z may be the thickness direction of the end cap 212, that is, the thickness direction of the first wall 213.

When the end cap 212 is welded to the shell 211, the connection portion may be a weld formed by welding the end cap 212 to the shell 211. The end cap 212 is welded to the shell 211, so that a connection strength between the end cap 212 and the shell 211 is high.

When the metal particles or separated active substance layers in the battery cell 20 are in contact with the connection portion, after the metal particles or separated active substance layers and the connection portion are soaked in the electrolyte solution, the connection portion is prone to corrosion and liquid leakage due to an electrochemical reaction. In this embodiment, the projection of the liquid absorbing member 25 on the end cap 212 does not overlap with the connection portion, and after the liquid absorbing member 25 absorbs the electrolyte solution, the electrolyte solution in the vicinity of the connection portion can be absorbed, so that a possibility that the electrolyte solution remains at the connection portion is reduced, thereby reducing a risk of corrosion and liquid leakage of the connection portion.

Referring to FIG. 3 and FIG. 5, according to some embodiments of this application, the battery cell 20 further includes a pressure relief mechanism 27, the pressure relief mechanism 27 is arranged on the first wall 213, and along the thickness direction (the direction Z) of the first wall 213, a projection of the liquid absorbing member 25 on the first wall 213 does not overlap with the pressure relief mechanism 27.

The pressure relief mechanism 27 is an element or a component that releases internal pressure or temperature of the battery cell 20. The pressure relief mechanism 27 may be in the form of an anti-explosion valve, an air valve, a pressure relief valve, a safety valve, or a nick provided on the housing 21. In addition, the pressure relief mechanism may be specifically a pressure-sensitive or temperature-sensitive element or structure. That is, when the internal pressure or temperature of the battery cell 20 reaches a threshold, the pressure relief mechanism 27 performs an action or a weak structure arranged in the pressure relief mechanism 27 is damaged, to form pressure relief holes for releasing the internal pressure or temperature of the battery cell 20.

The action generated by the pressure relief mechanism 27 may include, but is not limited to: at least a part in the pressure relief mechanism 27 is cracked, broken, torn, or opened.

The pressure relief mechanism 27 may have a weak portion, and when the electrolyte solution and the metal particles or separated active substance layers are in contact with the weak portion, due to an electrochemical reaction, the weak portion is prone to corrosion and liquid leakage. In this embodiment, the pressure relief mechanism 27 is arranged on the first wall 213, and the projection of the liquid absorbing member 25 on the first wall 213 does not overlap with the pressure relief mechanism 27, so that the liquid absorbing member 25 absorbs a free electrolyte solution, accumulation of the electrolyte solution at the pressure relief mechanism 27 is reduced, and a risk of corrosion and liquid leakage of the pressure relief mechanism 27 is reduced.

Referring to FIG. 3 and FIG. 5, and further referring to FIG. 6 and FIG. 7, FIG. 6 is a schematic diagram of assembly of an adapting member and an insulating member according to some embodiments of this application, and FIG. 7 is a partially enlarged view of a position A in FIG. 6. According to some embodiments of this application, the battery cell 20 further includes an adapting member 26, the adapting member 26 is arranged on a side of the insulating member 24 facing the electrode assembly 23 (referring to FIG. 3), the adapting member 26 connects the electrode terminal 22 to the tab 232, and along the thickness direction (the direction Z) of the first wall 213, a projection of the adapting member 26 on the first wall 213 at least partially overlaps with the projection of the liquid absorbing member 25 on the first wall 213.

The adapting member 26 is a component for implementing an electrical connection between the electrode terminal 22 and the tab 232. The adapting member 26 may be a metal member, for example, copper, iron, aluminum, or aluminum alloy.

Along the thickness direction of the first wall 213, the projection of the adapting member 26 on the first wall 213 may partially or totally overlap with the projection of the liquid absorbing member 25 on the first wall 213. The liquid absorbing member 25 may be located on a side of the adapting member 26 facing the insulating member 24, or the liquid absorbing member 25 may be located on a side of the adapting member 26 facing away from the insulating member 24.

The projection of the adapting member 26 on the first wall 213 at least partially overlaps with the projection of the liquid absorbing member 25 on the first wall 213, so that the liquid absorbing member 25 absorbs the electrolyte solution to the vicinity of the adapting member 26, and the electrolyte solution is in contact with the tab 232, transported to the separator through the tab 232, and absorbed and stored by the separator.

Referring to FIG. 3, according to some embodiments of this application, the adapting member 26 includes a first connection segment 261 and a second connection segment 262, where the first connection segment 261 is configured to connect to the tab 232, the second connection segment 262 is configured to connect to the electrode terminal 22, and the first connection segment 261 is connected to an end of the second connection segment 262.

As shown in FIG. 3, the first connection segment 261 is located at an end of the second connection segment 262 along a first direction X, there may be two first connection segments 261, and the two first connection segments 261 are spaced apart along a second direction Y, so that the adapting member 26 is connected to tabs 232 of two electrode assemblies 23, where every two of the second direction Y, the first direction X, and the thickness direction of the first wall 213 are perpendicular to each other.

In the figure, a direction indicated by a letter X is the first direction, and a direction indicated by a letter Y is the second direction.

Along the thickness direction of the first wall 213, the projection of the liquid absorbing member 25 on the first wall 213 at least covers a projection of the first connection segment 261 on the first wall 213, so that the electrolyte solution absorbed by the liquid absorbing member 25 or the electrolyte solution squeezed out by the liquid absorbing member 25 can be in contact with the tab 232.

Referring to FIG. 7, according to some embodiments of this application, along the thickness direction of the first wall 213, a gap Q exists between the adapting member 26 and the insulating member 24, and at least a part of the liquid absorbing member 25 is located in the gap Q.

The gap Q exists between the adapting member 26 and the insulating member 24, so that the liquid absorbing member 25 may utilize an assembly space, and at least a part of the liquid absorbing member 25 can be located between the adapting member 26 and the insulating member 24.

One part of the liquid absorbing member 25 may be located in the gap Q, and the other part of the liquid absorbing member 25 may protrude out of an edge of the adapting member 26; or the liquid absorbing member 25 is entirely located in the gap Q.

At least a part of the liquid absorbing member 25 is located in the gap Q, and expansion and deformation of the liquid absorbing member 25 after absorbing the electrolyte solution are limited through the adapting member 26, so that the electrolyte solution absorbed by the liquid absorbing member 25 is squeezed out, and the squeezed electrolyte solution can be transported to the separator along the tab 232 to be stored by the separator.

According to some embodiments of this application, along the thickness direction of the first wall 213, two opposite sides of the part of the liquid absorbing member 25 located in the gap Q are respectively in contact with the adapting member 26 and the insulating member 24.

The two opposite sides of the part of the liquid absorbing member 25 located in the gap Q are respectively in contact with the adapting member 26 and the insulating member 24, so that a size of the part of the liquid absorbing member 25 located in the gap Q in the thickness direction of the first wall 213 may be large, the liquid absorbing member 25 can be positioned by the adapting member 26 and the insulating member 24, and a risk of movement of the liquid absorbing member 25 relative to the adapting member 26 is reduced.

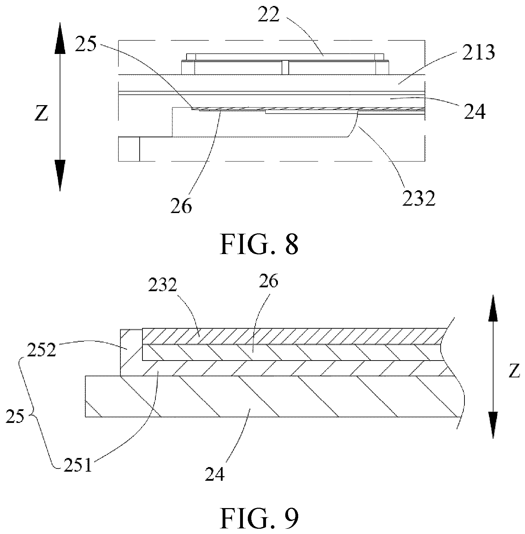

Referring to FIG. 8, FIG. 8 is a partially enlarged view of a position B in FIG. 4. According to some embodiments of this application, the tab 232 is connected to a side of the adapting member 26 facing away from the insulating member 24.

Along the thickness direction (the direction Z) of the first wall 213, the tab 232 may be located on the side of the adapting member 26 facing away from the insulating member 24.

The tab 232 is connected to the side of the adapting member 26 facing away from the insulating member 24, so that the adapting member 26 and the insulating member 24 are assembled, and the tab 232 is connected to the adapting member 26.

Referring to FIG. 5 and FIG. 8, according to some embodiments of this application, along the thickness direction of the first wall 213, the projection of the liquid absorbing member 25 on the first wall 213 at least partially overlaps with a projection of the tab 232 on the first wall 213.

The projection of the liquid absorbing member 25 on the first wall 213 at least partially overlaps with the projection of the tab 232 on the first wall 213, so that the electrolyte solution absorbed by the liquid absorbing member 25 is transported to the separator along the tab 232 to be stored by the separator.

For example, in the embodiment that at least a part of the liquid absorbing member 25 is located in the gap Q, when the tab 232 is connected to a side of the adapting member 26 facing the insulating member 24, the tab 232 is close to the liquid absorbing member 25 or is in contact with the liquid absorbing member 25, and the electrolyte solution absorbed by the liquid absorbing member 25 is easily in contact with the tab 232, so that the electrolyte solution is easily transported to the separator through the tab 232. When the tab 232 is connected to the side of the adapting member 26 facing away from the insulating member 24, expansion of the liquid absorbing member 25 after absorbing the electrolyte solution is limited by the adapting member 26, the electrolyte solution absorbed by the liquid absorbing member 25 is squeezed out, and the squeezed electrolyte solution easily accumulates on the side of the adapting member 26 facing away from the insulating member 24, so that the electrolyte solution is easily in contact with the tab 232 and is transported to the separator through the tab 232.

Referring to FIG. 7, according to some embodiments of this application, the liquid absorbing member 25 includes a first portion 251 and a second portion 252, the first portion 251 is located in the gap Q, and the second portion 252 is connected to the first portion 251 and protrudes out of an edge of the adapting member 26.

The first portion 251 may be the part of the liquid absorbing member 25 located in the gap Q, and the second portion 252 may be the part of the liquid absorbing member 25 protruding out of the adapting member 26.

The second portion 252 protrudes out of the edge of the adapting member 26, after expansion of the first portion 251 after absorbing the electrolyte solution is limited by the adapting member 26, the electrolyte solution can be squeezed out, and after the second portion 252 is expanded after absorbing the electrolyte solution, the electrolyte solution at the liquid absorbing member 25 is easily in contact with the tab 232 and is transported to the separator through the tab 232.

Referring to FIG. 5, according to some embodiments of this application, the liquid absorbing member 25 is arranged along an edge of the adapting member 26, and a part of the liquid absorbing member 25 protrudes out of the edge of the adapting member 26.

The liquid absorbing member 25 may extend along the edge of the adapting member 26 by a circle, or the liquid absorbing member 25 may extend along the edge of the adapting member 26 by a partial region.

For example, in the embodiment that the liquid absorbing member 25 includes the first portion 251 and the second portion 252, the second portion 252 is arranged along the edge of the adapting member 26.

Referring to FIG. 9, FIG. 9 is a schematic diagram of contact between a second portion and a tab according to some embodiments of this application. According to some embodiments of this application, the second portion 252 is in contact with the tab 232.

Along the thickness direction (the direction Z) of the first wall 213, the second portion 252 may extend toward a direction facing away from the insulating member 24, so that the second portion 252 is in contact with the tab 232.

In some embodiments, a surface of the second portion 252 facing the insulating member 24 may be coplanar with a surface of the first portion 251 facing the insulating member 24, and a surface of the second portion 252 facing away from the insulating member 24 protrudes out of the adapting member 26 along the thickness direction of the first wall 213. For example, the surface of the second portion 252 facing away from the insulating member 24 extends to be in contact with the tab 232.

After the second portion 252 absorbs the electrolyte solution, the second portion 252 can be expanded, so that the electrolyte solution is in contact with the tab 232, and the electrolyte solution is transported to the separator through the tab 232 to be stored by the separator.

According to some embodiments of this application, along the thickness direction of the first wall 213, a size of the gap Q is H, and H meets: 0.2 mm≤H≤1 mm.

The gap Q may be an assembly gap Q between the adapting member 26 and the insulating member 24, and at least a part of the liquid absorbing member 25 is arranged in the gap Q, so that the liquid absorbing member 25 is positioned, and the assembly gap Q is properly utilized.

A setting range of the gap Q meets the foregoing relationship, so that the liquid absorbing member 25 can be accommodated, and space occupation can be reduced.

If the gap Q is excessively small (for example, less than 0.2 mm), a liquid absorbing amount of the liquid absorbing member 25 is small; and if the gap Q is excessively large (for example, greater than 1 mm), a large assembly space is occupied.

Optionally, H may be 0.2 mm, 0.3 mm, 0.4 mm, 0.5 mm, 0.6 mm, 0.7 mm, 0.8 mm, 0.9 mm, or 1 mm.

According to some embodiments of this application, 0.4 mm≤H≤0.6 mm.

Compared with a case that 0.2 mm≤H, when 0.4 mm≤H, the liquid absorbing member 25 is thick; and compared with a case that H≤1 mm, when H≤0.6 mm, the liquid absorbing member occupies a limited space.

Optionally, H may be 0.4 mm, 0.45 mm, 0.5 mm, 0.55 mm, or 0.6 mm.

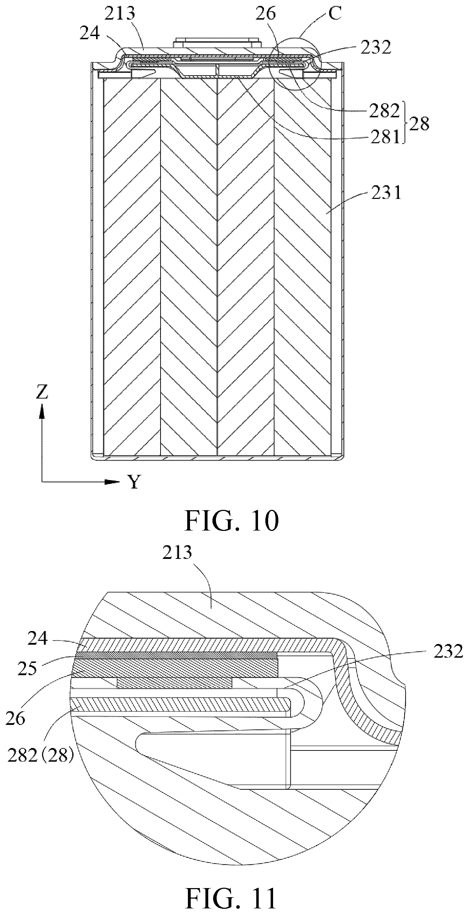

Referring to FIG. 10 and FIG. 11, FIG. 10 is a cross-sectional view of a battery cell according to some other embodiments of this application, and FIG. 11 is a partially enlarged view of a position C in FIG. 10. According to some embodiments of this application, the battery cell 20 further includes a support member 28, the support member 28 is arranged on a side of the insulating member 24 facing the electrode assembly 23, the support member 28 is located between the insulating member 24 and the body 231, the tab 232 is bent around the support member 28, and the liquid absorbing member 25 is arranged between the support member 28 and the insulating member 24.

The support member 28 is an insulating component arranged between the insulating member 24 and the body 231, and the support member 28 has an electrical insulation function. The support member 28 can be supported between the insulating member 24 and the body 231, and can limit movement of the body 231.

In some embodiments, the support member 28 may include a support portion 281 and a separation portion 282, the support portion 281 is configured to abut against the body 231 along the thickness direction (the direction Z) of the first wall 213, the tab 232 is bent around the separation portion 282, and in a width direction (the direction Y) of the first wall 213, the separation portion 282 is connected to an end of the support portion 281.

The tab 232 is bent around the support member 28, and the tab 232 is a bent structure. The bent structure may be that one end of the tab 232 is connected to the body 231, and the other end of the tab 232 is electrically connected to the electrode terminal 22 after bypassing an edge of the support member 28.

A part of the tab 232 located on a side of the support member 28 facing away from the body 231 is electrically connected to the electrode terminal 22, and in a use scenario that the body 231 is located above the insulating member 24, the support member 28 may fit the insulating member 24 to protect the part of the tab 232 connected to the electrode terminal 22, so that the tab 232 is stably connected to the electrode terminal 22.

In the foregoing solution, the support member 28 is located between the insulating member 24 and the body 231, and the tab 232 is bent around the support member 28, so that the support member 28 can facilitate bending of the tab 232 and can be supported between the insulating member 24 and the body 231, to position the body 231, thereby reducing a possibility that the tab 232 is driven to move by movement of the body 231 and reducing a risk that a joint between the tab 232 and another component is damaged.

According to some embodiments of this application, the battery cell 20 further includes an adapting member 26, the adapting member 26 is arranged between the insulating member 24 and the support member 28, and the adapting member 26 connects the electrode terminal 22 to the tab 232.

The adapting member 26 is a conductive component configured to implement an electrical connection between the electrode terminal 22 and the tab 232.

Along the thickness direction (the direction Z) of the first wall 213, the adapting member 26 is arranged between the insulating member 24 and the support member 28, the insulating member 24 can insulate and isolate the adapting member 26 from the first wall 213, and the support member 28 can insulate and isolate the adapting member 26 from the body 231.

In the foregoing solution, the adapting member 26 is arranged between the insulating member 24 and the support member 28, to implement an electrical connection between the electrode terminal 22 and the tab 232.

According to some embodiments of this application, along the thickness direction (the direction Z) of the first wall 213, a projection of the adapting member 26 on the first wall 213 at least partially overlaps with the projection of the liquid absorbing member 25 on the first wall 213.

Along the thickness direction of the first wall 213, the adapting member 26 is located between the insulating member 24 and the support member 28, the liquid absorbing member 25 is located between the insulating member 24 and the support member 28, and the liquid absorbing member 25 may be arranged coplanar with the adapting member 26, or the liquid absorbing member 25 may be located between the adapting member 26 and the insulating member 24, or the liquid absorbing member 25 may be located between the adapting member 26 and the support member 28.

In some embodiments, the liquid absorbing member 25 may be connected to the adapting member 26, or the liquid absorbing member 25 may be connected to the support member 28, or the liquid absorbing member 25 may be clamped and limited by the insulating member 24 and the adapting member 26.

In the foregoing solution, when the liquid absorbing member 25 is located between the adapting member 26 and the insulating member 24, the adapting member 26 and the insulating member 24 can limit an expansion and deformation amount of the liquid absorbing member 25 after absorbing the electrolyte solution, so that the electrolyte solution is guided by the liquid absorbing member 25 to the vicinity of the adapting member 26, and the electrolyte solution is in contact with the tab 232, transported to the separator through the tab 232, and absorbed and stored by the separator. When the liquid absorbing member 25 is located between the adapting member 26 and the support member 28, the liquid absorbing member 25 may be close to the tab 232, so that the liquid absorbing member 25 can guide the electrolyte solution to the vicinity of the tab 232, and the electrolyte solution is in contact with the tab 232, transported to the separator through the tab 232, and absorbed and stored by the separator.

According to some embodiments of this application, the liquid absorbing member 25 is made of an insulating porous material.

The liquid absorbing member 25 may be a sponge, for example, polyurethane, and the liquid absorbing member 25 may be elastic, so that after the liquid absorbing member 25 absorbs liquid, the liquid absorbing member 25 can be expanded and deformed.

The liquid absorbing member 25 has an insulation function to reduce a risk of short circuit caused by contact between components inside the battery cell 20, and the porous material has a good adsorption effect, so that the liquid absorbing member 25 can absorb more electrolyte solutions.

According to some embodiments of this application, the tab 232 includes a plurality of stacked sub-tabs.

The plurality of sub-tabs are stacked, a gap exists between every two adjacent sub-tabs, and a size of the gap is small, so that after the electrolyte solution enters the gap, the electrolyte solution moves toward the separator along the sub-tabs under capillary action.

The tab 232 includes a plurality of sub-tabs, and a gap exists between every two adjacent sub-tabs, so that after the electrolyte solution comes into contact with the tab 232, capillary action is formed, and the electrolyte solution moves toward the separator along the sub-tabs.

According to some embodiments of this application, an initial volume of the liquid absorbing member 25 is V0, and after the liquid absorbing member 25 absorbs the electrolyte solution and is saturated, a volume of the liquid absorbing member 25 is V1, and V0 and V1 meet: 5≤V1/V0≤10.

When a ratio of the volume V1 of the liquid absorbing member 25 after saturation to the initial volume V0 of the liquid absorbing member 25 meets the foregoing range, the liquid absorbing member 25 has a good saturation absorption capacity, and a liquid absorbing effect is good.

If V1/VO is small (for example, less than 5), the liquid absorbing member 25 has a small saturation absorption capacity, and the liquid absorbing effect is not good; and if V1/VO is large (for example, greater than 10), when the liquid absorbing member 25 is arranged between the adapting member 26 and the insulating member 24 and the tab 232 is connected to the side of the adapting member 26 facing away from the insulating member 24, volume expansion of the liquid absorbing member 25 is excessively large, leading to an excessively large forced deformation amount of the tab 232.

Optionally, V1/VO may be 5, 6, 7, 8, 9, or 10.

According to some embodiments of this application, 7≤V1/V0≤9.

Compared with a case that 5≤V1/V0, when 7≤V1/V0, the saturation absorption capacity of the liquid absorbing member 25 is large, and the liquid absorbing effect is good; and compared with a case that V1/V0≤10, when V1/V0≤9, the volume expansion of the liquid absorbing member 25 is small.

According to some embodiments of this application, the tab 232 extends out from an end of the body 231 close to the first wall 213.

According to some embodiments of this application, during use of the battery cell 20, the first wall 213 is arranged downwards, the first wall 213 can support the electrode assembly 23, the electrode assembly 23 is located above the first wall 213 along the thickness direction of the first wall 213, the insulating member 24 is located between the first wall 213 and the body 231 of the electrode assembly 23, and the battery cell 20 is inverted and used. During inverted use of such a battery cell 20, the metal particles or separated active substances easily drop onto the insulating member 24, and by arranging the liquid absorbing member 25 between the adapting member 26 and the insulating member 24, the liquid absorbing member 25 can absorb the free electrolyte solution on a side of the insulating member 24 facing the body 231, so that the free electrolyte solution is reduced, and a possibility that the free electrolyte solution participates in an electrochemical reaction between the metal particles or separated active substances and the housing 21 is reduced, thereby reducing a risk of corrosion and liquid leakage of the housing 21.

According to some embodiments of this application, an embodiment of this application further provides a battery 100, where the battery 100 includes the battery cell 20 according to any one of the foregoing embodiments.

According to some embodiments of this application, an embodiment of this application further provides a power consuming device, where the power consuming device includes the battery cell 20 according to any one of the foregoing embodiments or the battery 100, and the battery cell 20 is configured to provide electric energy.

According to some embodiments of this application, referring to FIG. 3 to FIG. 9, this application provides a battery cell 20, where the battery cell 20 is cuboid-shaped, and the battery cell 20 includes a housing 21, an electrode terminal 22, an electrode assembly 23, an insulating member 24, an adapting member 26, and a liquid absorbing member 25. The housing 21 includes a shell 211 and an end cap 212, where the shell 211 has an opening, the end cap 212 closes the opening, and the end cap 212 is a first wall 213. The end cap 212 is welded to the shell 211 to form a connection portion. The electrode terminal 22 is arranged on the first wall 213. The first wall 213 is provided with a pressure relief mechanism 27. The electrode assembly 23 is arranged in the shell 211, the electrode assembly 23 includes a body 231 and a tab 232 extending out from the body 231, and the tab 232 is located at an end of the body 231 close to the first wall 213. The insulating member 24 is arranged on a side of the first wall 213 facing the electrode assembly 23. The adapting member 26 is arranged on a side of the insulating member 24 facing the electrode assembly 23, the adapting member 26 connects the electrode terminal 22 to the tab 232, and the tab 232 is connected to a side of the adapting member 26 facing away from the insulating member 24. Along a thickness direction (a direction Z) of the first wall 213, a gap Q exists between the adapting member 26 and the insulating member 24. The liquid absorbing member 25 includes a first portion 251 and a second portion 252, the first portion 251 is located in the gap Q, along the thickness direction of the first wall 213, the first portion 251 is respectively in contact with the adapting member 26 and the insulating member 24, and the second portion 252 is connected to the first portion 251 and protrudes out of an edge of the adapting member 26. Along the thickness direction of the first wall 213, a projection of the liquid absorbing member 25 on the first wall 213 at least partially overlaps with a projection of the tab 232 on the first wall 213, the projection of the liquid absorbing member 25 on the first wall 213 does not overlap with the connection portion, and the projection of the liquid absorbing member 25 on the first wall 213 does not overlap with the pressure relief mechanism 27. According to the battery cell 20 provided in the embodiments of this application, during use, the first wall 213 is arranged downwards, and the electrode assembly 23 is arranged on the first wall 213.

Although this application has been described with reference to exemplary embodiments, various improvements may be made for this application and components in this application may be replaced with equivalents without departing from the scope of this application. Especially, as long as there is no structural conflict, the various technical features mentioned in the embodiments may be combined in any manner. This application is not limited to the particular embodiments disclosed in this specification, but includes all technical solutions that fall within the scope of the claims.

## Claims

1. A battery cell, comprising:
a housing, comprising a first wall;
an electrode terminal, arranged on the first wall;
an electrode assembly, comprising a body and a tab extending out from the body, wherein the tab is electrically connected to the electrode terminal;
an insulating member, arranged between the first wall and the electrode assembly and configured to isolate the first wall from the electrode assembly; and
a liquid absorbing member, located between the body and the insulating member and configured to absorb an electrolyte solution.

2. The battery cell according to claim 1, wherein the housing comprises a shell and an end cap, the shell has an opening, the end cap closes the opening, the end cap is connected to the shell to form a connection portion, the end cap is the first wall, and along a thickness direction of the end cap, a projection of the liquid absorbing member on the end cap does not overlap with the connection portion.

3. The battery cell according to claim 1 or 2, wherein the battery cell further comprises a pressure relief mechanism, the pressure relief mechanism is arranged on the first wall, and along a thickness direction of the first wall, a projection of the liquid absorbing member on the first wall does not overlap with the pressure relief mechanism.

4. The battery cell according to any one of claims 1 to 3, wherein the battery cell further comprises an adapting member, the adapting member is arranged on a side of the insulating member facing the electrode assembly, the adapting member connects the electrode terminal to the tab, and along the thickness direction of the first wall, a projection of the adapting member on the first wall at least partially overlaps with the projection of the liquid absorbing member on the first wall.

5. The battery cell according to claim 4, wherein along the thickness direction of the first wall, a gap exists between the adapting member and the insulating member, and at least a part of the liquid absorbing member is located in the gap.

6. The battery cell according to claim 5, wherein the tab is connected to a side of the adapting member facing away from the insulating member.

7. The battery cell according to claim 5 or 6, wherein along the thickness direction of the first wall, the projection of the liquid absorbing member on the first wall at least partially overlaps with a projection of the tab on the first wall.

8. The battery cell according to any one of claims 5 to 7, wherein the liquid absorbing member comprises a first portion and a second portion, the first portion is located in the gap, and the second portion is connected to the first portion and protrudes out of an edge of the adapting member.

9. The battery cell according to claim 8, wherein the second portion is in contact with the tab.

10. The battery cell according to any one of claims 5 to 9, wherein along the thickness direction of the first wall, a size of the gap is H, and H meets: 0.2 mm≤H≤1 mm.

11. The battery cell according to claim 10, wherein 0.4 mm≤H≤0.6 mm.

12. The battery cell according to any one of claims 1 to 11, wherein the battery cell further comprises a support member, the support member is arranged on a side of the insulating member facing the electrode assembly, the support member is located between the insulating member and the body, the tab is bent around the support member, the support member is configured to prevent the body from moving along a direction facing the first wall, and the liquid absorbing member is arranged between the support member and the insulating member.

13. The battery cell according to claim 12, wherein the battery cell further comprises an adapting member, the adapting member is arranged between the insulating member and the support member, and the adapting member connects the electrode terminal to the tab.

14. The battery cell according to claim 13, wherein along the thickness direction of the first wall, the projection of the adapting member on the first wall at least partially overlaps with the projection of the liquid absorbing member on the first wall.

15. The battery cell according to any one of claims 1 to 14, wherein the liquid absorbing member is made of an insulating porous material.

16. The battery cell according to any one of claims 1 to 15, wherein the tab comprises a plurality of stacked sub-tabs.

17. The battery cell according to any one of claims 1 to 16, wherein an initial volume of the liquid absorbing member is V0, and after the liquid absorbing member absorbs the electrolyte solution and is saturated, a volume of the liquid absorbing member is V1, and V0 and V1 meet: 5≤V1/V0≤10.

18. The battery cell according to claim 17, wherein 7≤V1/V0≤9.

19. A battery, comprising the battery cell according to any one of claims 1 to 18.

20. A power consuming device, comprising the battery cell according to any one of claims 1 to 18 or the battery according to claim 19, wherein the battery cell is configured to provide electric energy.
